# EUROPÄISCHE PATENTSCHRIFT

(11) **EP 1 878 535 B1**
(45) Veröffentlichungstag und Bekanntmachung des Hinweises auf die Patenterteilung: **18.03.2009**
(21) Anmeldenummer: 07012996.0
(22) Anmeldetag: 03.07.2007
(51) Int. Cl.: B23Q 17/09, H02J 17/00

(54) **Sensorsystem für Werkzeugmaschinen**
Sensor system for machine tools
Système de capteur pour machines-outils

(30) Priorität: 04.07.2006 DE 102006030834
(43) Veröffentlichungstag der Anmeldung: 16.01.2008
(73) Patentinhaber: ARTIS Gesellschaft für angewandte Meßtechnik mbH, 29646 Bispingen-Behringen (DE)
(72) Erfinder: Lange, Dirk, Dr.-Ing., 21335 Lüneburg (DE); Redecker, Volker, 29646 Bispingen (DE)
(74) Vertreter: Hess, Peter K. G.

(56) Entgegenhaltungen:
- DE-A1- 10 163 734
- DE-A1- 19 531 625
- DE-A1- 19 926 799
- US-A- 4 779 319
- US-A- 6 037 743

## Beschreibung

### 1. Technisches Gebiet

Die vorliegende Erfindung betrifft ein Sensorsystem zur Überwachung von Bearbeitungsvorgängen bei Werkzeugmaschinen.

### 2. Der Stand der Technik

Moderne Werkzeugmaschinen führen programmgesteuert immer komplexer werdende Bearbeitungsvorgänge durch. Gleichzeitig soll eine Werkzeugmaschine mehr und mehr sich selbst überwachen und bei einem Fehler die geeigneten Maßnahmen ergreifen können. Dafür benötigt die Werkzeugmaschine ein Sensorsystem, das die relevanten physikalischen Messgrößen während des Bearbeitungsvorgangs aufnehmen und gegebenenfalls die Daten an eine Steuerungseinheit der Werkzeugmaschine weiterleiten kann.

Für solche Sensorsysteme ist es wichtig, dass die Messeinrichtungen des Sensorsystems in der Nähe des Bearbeitungswerkzeugs bzw. der Wirkstelle montiert sind, um die relevanten Messgrößen des Bearbeitungsvorgangs aufnehmen zu können. Bei spanabhebenden Werkzeugmaschinen sollten die Messeinrichtungen z.B. auf der Werkzeugspindel montiert sein, um beispielsweise Drehmomente über Dehnungsmessstreifen (DMS) oder Körperschall über Piezosensoren messen zu können.

Ein Problem stellt dabei die Energieversorgung der Messeinrichtung dar. Eine Energieversorgung über Kabel ist ungünstig, wenn die Messeinrichtung auf einem schnell beweglichen Teil der Werkzeugmaschine wie einer Werkzeugspindel montiert ist.

In der DE 101 63 734 A1, die den Gegenstand des Oberbegriffs des Patentanspruchs 1 offenbart, und der DE 199 26 799 A1 wird jeweils eine drahtlose Energieversorgung für Messeinrichtungen vorgeschlagen, die nach dem Prinzip eines Transformators arbeitet. Dabei wird elektrische Energie über ein elektromagnetisches Feld berührungsfrei von einer Primärspule zu einer Sekundärspule übertragen, welche wiederum die Messeinrichtungen versorgt. Die Primärspule ist im Arbeitsbereich einer Werkzeugmaschine installiert, während die Sekundärspule sich bei einem Bearbeitungsvorgang mit dem Werkzeug mitbewegen kann.

Die Energieversorgungssysteme, die in den beiden erwähnten Dokumenten DE 101 63 734 A1 und DE 199 26 799 A1 vorgeschlagen werden, haben jedoch den Nachteil, dass das überwachte Werkzeug mit der Messeinrichtung immer in einem Bereich bleiben muss, in dem ein hinreichend starkes elektromagnetisches Feld vorliegt. Wenn die Spindel der Werkzeugmaschine einen großen Bewegungsbereich hat oder das elektromagnetische Feld durch das zu bearbeitende Werkstück o. ä. abgeschirmt wird, z. B. weil tiefe Bohrungen durchgeführt werden, ist ein hinreichend starkes äußeres Feld möglicherweise nicht im gesamten Bewegungsbereich vorhanden. Gerade die Überwachung von tiefen Bohrungen oder Fräsungen ist aber besonders wichtig, da hier die Gefahr von Beschädigungen der eingesetzten Werkzeuge besonders groß ist. Wenn man zur Kompensation von Abschirmeffekten die äußere Feldstärke im gesamten Bewegungsbereich hinreichend groß machen möchte, ist dies sehr aufwendig, da eine Vielzahl von Primärspulen benötigt wird und die Erzeugung starker Felder einen hohen Energieeinsatz verlangt. Ferner beschränkt die Unterbringung von einer oder mehrerer Primärspulen im Arbeitsbereich möglicherweise die Bewegungsfreiheit von Komponenten des Werkzeugmaschine.

Die DE 195 31 625 A1 offenbart eine kontaktlose IC-Karte, umfassend: eine erste Leistungsquelle, die in der Karte installiert ist, eine zweite Leistungsquelle zum Zufuhren elektrischer Leistung aus gespeicherter elektrischer Leistung, die durch Gleichrichten von elektrischer Leistung einer über einen Antennenschaltkreis von außerhalb erhaltenen elektromagnetischen Welle erhalten wurde. Außerdem offenbart die DE 195 31 625 A1 eine Leistungsquellen-Schalteinrichtung zum Umschalten der elektrischen Leistung, die einer Datenverarbeitungs/Datenspeicher-Einrichtung zugeführt wird, zwischen der ersten und zweiten Leistungsquelle, wobei, wenn die elektromagnetische Welle stark genug ist, die zweite Leistungsquelle verwendet wird, und, wenn die elektromagnetische Welle schwach ist, die erste Leistungsquelle verwendet wird.

Der vorliegenden Erfindung liegt daher das Problem zugrunde, die aus dem Stand der Technik bekannten Sensorsysteme für Werkzeugmaschinen so weiter zu entwickeln, dass auch bei geringem Kostenaufwand eine oder mehrere Messeinrichtungen zuverlässig mit Energie versorgt werden können, um Messungen von Bearbeitungsparametem während im Wesentlichen aller Bearbeitungsphasen der Werkzeugmaschine zu gewährleisten.

### 3. Zusammenfassung der Erfindung

Dieses Problem wird durch ein Sensorsystem für eine Werkzeugmaschine gemäß Patentanspruch 1 gelöst.

Die Bereitstellung von zwei Energieversorgungseinheiten, dass die zumindest eine Messeinrichtung des Sensors auch in Arbeitsbereichen der Werkzeugmaschine, in denen das umgebende elektromagnetische Feld schwach oder sogar gar nicht vorhanden ist, zuverlässig funktioniert; denn die zweite batteriegestützte Energieversorgungseinheit übernimmt in diesen Situationen die Energieversorgung der Messeinrichtung des Sensors. Damit ermöglicht die erfindungsgemäße Bereitstellung von zwei Energieversorgungen einen im Wesentlichen kontinuierlichen und stabilen Messbetrieb des Sensors, mit dem insbesondere auch kritische Situationen wie tiefe Bohrlöcher oder Fräsungen zuverlässig überwacht werden können.

Die Bereitstellung der ersten Energieversorgungseinheit zusätzlich zur zweiten, batteriegestützten Versorgungseinheit stellt sicher, dass die Batterien nicht ständig ausgetauscht oder geladen werden müssen. Da die zweite Energieversorgungseinheit nur in manchen Bearbeitungssituationen zum Einsatz kommt, wird die Lebensdauer der Batterie erheblich verlängert.

Eine besonders vorteilhafte Ausführungsform der Erfindung ergibt sich, wenn die Batterie als ein aufladbarer Akkumulator ausgebildet ist und wenn die erste drahtlose Energieversorgungseinheit die Energie aus einem umgebenden elektromagnetischen Feld aufnimmt, das den aufladbaren Akkumulator auflädt. Dies ist eine besonders kostengünstige Art der Energieversorgung, da Kosten für den Austausch der Batterien nahezu vollständig entfallen. Die Verwendung von nicht aufladbaren Batterien ist jedoch ebenfalls denkbar.

Bevorzugt wird das elektromagnetische Feld, welches den Sensor umgibt, von zumindest einer Primärspule erzeugt. Dann funktioniert die erste drahtlose Energieversorgung des Sensors nach dem Induktionsprinzip. Wenn der Sensor bei einem Bearbeitungsvorgang nicht gebraucht wird, kann er, gegebenenfalls zusammen mit einem Werkzeug, in einem Magazin abgelegt werden. In einer bevorzugten Ausfiihrungsform der Erfindung deckt das umgebende elektromagnetische Feld das Magazin ab und lädt in den Bearbeitungspausen den Akkumulator auf. Dies ist eine besonders bequeme Art der Aufladung der Akkumulatoren im Ruhezustand, da die Erzeugung einer Steckverbindung für das Laden im Magazin nicht erforderlich ist.

Ein Problem beim Einsatz von Akkumulatoren besteht darin, dass eine Tiefentladung der Akkumulatoren und ein damit einhergehender Kapazitätsverlust verhindert werden muss. In einer bevorzugten Ausführungsform der Erfindung umfasst das Sensorsystem deshalb eine Ladeelektronik, welche eine Tiefentladung der Akkumulatoren verhindert.

Erfindungsgemäß weist das Sensorsystem eine Sende- und / oder eine Empfangseinheit zur Datenübertragung auf. Die Datenübertragung kann in bevorzugten Ausführungsformen dazu eingesetzt werden, um eine Tiefentladung der Akkumulatoren zu verhindern. Außerdem wird erfindurigsgemäß außerhalb eines Bearbeitungsvorgangs der Werkzeugmaschine und in Abwesenheit eines umgebenden elektromagnetischen Feldes die zumindest eine Messeinrichtung des Sensors abgeschaltet und die Datenübertragung periodisch mit einer ersten Zeitperiode t₁ überprüft, vorzugsweise ungefähr alle 200 Millisekunden. Weiterhin wird der Sensor vorzugsweise ganz ausgeschaltet, wenn die Datenübertragung während einer zweiten Zeitperiode t₂, die größer ist als die erste Zeitperiode t₁, nicht erfolgt ist. Bevorzugt wird der Sensor dann wieder aktiviert, wenn er sich wieder in einem umgebenden elektromagnetischen Feld befindet.

In einer weiteren bevorzugten Ausführungsform der Erfindung werden die Batterien des Sensors so bezüglich einer Drehachse der Werkzeugmaschine angeordnet, dass bei einer Drehung um die Drehachse keine Unwucht erzeugt wird. In einer besonders bevorzugten Ausführungsform werden die Batterien dabei so angeordnet, dass sie im Wesentlichen den gleichen Abstand d von der Drehachse der Werkzeugmaschine haben.

Weitere Fortentwicklungen der Erfindung finden sich in weiteren abhängigen Ansprüchen.

### 4. Kurze Beschreibung der Zeichnungen

Im Folgenden werden Aspekte der vorliegenden Erfindung unter Bezugnahme auf die begleitenden Figuren erläutert:
- Fig. 1:: Eine schematische Darstellung des Gesamtaufbaus eines Ausführungsbeispiels der vorliegenden Erfindung.
- Fig. 2:: Eine schematische Darstellung des Aufbaus des Sensors in einer bevorzugten Ausführungsform der Erfindung; und
- Fig. 3:: Eine Darstellung einer beispielhaften Anordnung des Sensors aus Fig. 2 an einer Werkzeugspindel einer Werkzeugmaschine.

### 5. Detaillierte Beschreibung von bevorzugten Ausführungsformen der Erfindung

Im Folgenden werden gegenwärtig bevorzugte Ausführungsbeispiele des erfindungsgemäßen Sensorsystems genauer erläutert. Dabei wird das Sensorsystem gemäß der vorliegenden Erfindung im Zusammenhang mit einer spanabhebenden Werkzeugmaschine mit Werkzeugspindel beschrieben. Ein Einsatz des erfindungsgemäßen Sensorsystems in anderen Maschinen ist jedoch ebenfalls möglich.

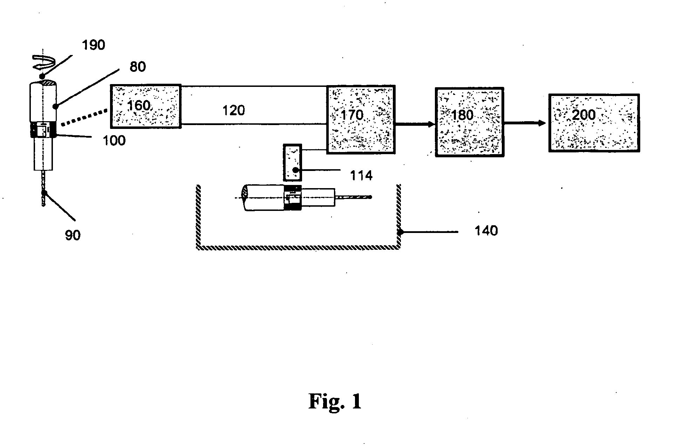

In Fig. 1 wird eine Gesamtansicht einer Ausführungsform der Erfindung dargestellt. Hierbei ist der Sensor 100 als Sondermessfutter ausgebildet, welcher modular an der Werkzeugspindel montiert ist. Der genaue Aufbau des Sensors 100 wird weiter unten erläutert.

Links in Fig.1 ist die Werkzeugspindel der Werkzeugmaschine (nicht dargestellt) mit einem Werkzeughalter 80 schematisch dargestellt. An dem Werkzeughalter 80 sind sowohl der Sensor 100 (das Sondermessfutter) als auch das Werkzeug 90 befestigt, wobei sämtliche Geräte sich gemeinsam um die Drehachse 190 der Werkzeugspindel drehen können.

In dieser Ausführungsform ist das Sensorsystem so ausgebildet, dass die vom Sensor 100 aufgenommenen Messdaten von einem Antennenmodul 160 empfangen werden, das sich vorzugsweise in einer Entfernung von ca. 1 m mit Sichtverbindung zum Sondermessfutter befindet. Danach werden die Messdaten über einen Datenbus 120 an eine Modulelektronik 170 weitergeleitet. Von dort gelangen die Daten an ein Überwachungssystem 180 der Werkzeugmaschine, welches mit einem Computer 200 verbunden ist, auf dem die Daten visualisiert werden können. Die gemessenen Daten, beispielsweise auftretende Drehmomente oder die eingesetzte Vorschubkraft der Werkzeugmaschine, werden vorzugsweise mit einem Takt von 10 ms vom Sensor 100 an das Antennenmodul 160 übertragen.

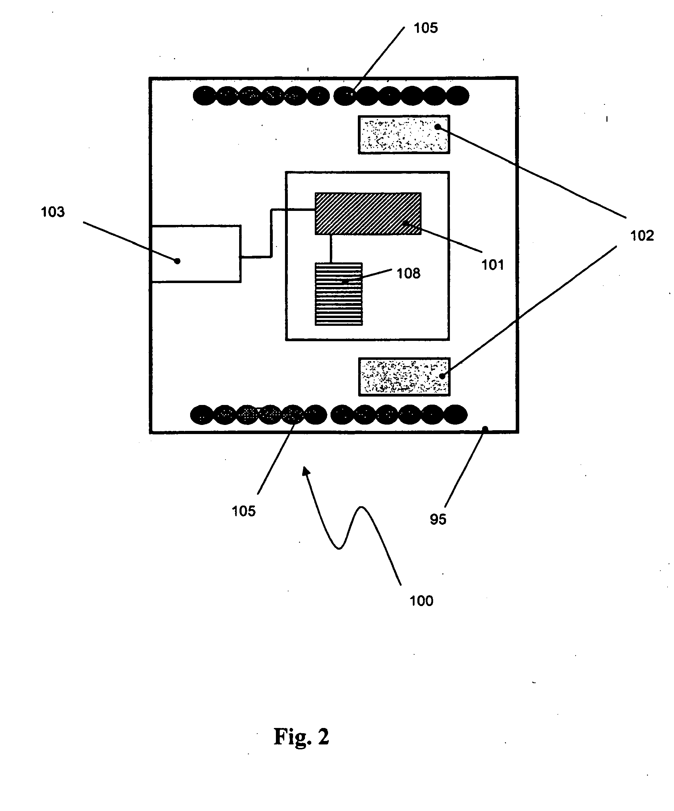

Bevorzugt ist die Datenübertragung zwischen dem Sensor 100 und dem Überwachungssystem 180 bidirektional. Eine bidirektionale Datenübertragung zwischen einem Sensor und einem Überwachungssystem wird detaillierter in der DE 10 2004 051 145 A1 der Anmelderin beschrieben. Die vom Sensor 100 aufgenommenen Messdaten werden dabei an das Überwachungssystem 180 geleitet, wo sie mit Hilfe des Computers 200 ausgewertet werden. In dieser Ausführungsform wirkt das Antennenmodul 160 sowohl als Empfänger als auch als Sender von Daten, beispielsweise zur extern gesteuerten Anpassung der Messeinrichtungen oder der Auswerteelektronik im Sensor 100. Entsprechend besitzt auch der Sensor 100 eine Sende- und Empfangseinheit 108 (vgl. schematische Detaildarstellung des Sensors in Fig.2). In einer alternativen Ausführungsform kann die Auswertung zum Teil oder ganz in den Sensor selbst integriert sein, beispielsweise über einen entsprechend programmierten Mikrochip.

In Fig. 1 unten ist der Sensor bei einem Ladevorgang getrennt von der Werkzeugspindel dargestellt. Hier befindet sich der Sensor in der Nähe eines Stators 114, welcher als Primärspule ausgebildet ist. Der Stator 114 erzeugt ein elektromagnetisches Statorfeld, welches drahtlos elektrische Energie in einer Sekundärspule 105 des Sensors 100 erzeugt (vgl. schematische Detaildarstellung des Sensors in Fig. 2). Die erste drahtlose Energieversorgungseinheit zur Versorgung der Messeinrichtung des Sensors 100 entspricht in dieser Ausführungsform der Sekundärspule 105 des Sensors 100. In einer bevorzugten Ausführungsform ist die Batterie der zweiten Energieversorgung des Sensorsystems als aufladbarer Akkumulator ausgebildet, wobei das Statorfeld über die Sekundärspule den/die Akkumulatoren/en auflädt. Besonders praktisch ist es, wenn der Aufladevorgang der Akkumulatoren während der Zeiten stattfindet, in denen das Werkzeug mit dem angeschlossenen Sensor 100 nicht zur Werkstückbearbeitung gebraucht wird und sich der entsprechende Werkzeughalter 80 in einem Werkzeugmagazin 140 befindet, wie in Fig. 1 schematisch dargestellt. Zusätzlich kann in dieser Situation der momentane Ladezustand der Akkumulatoren über die Datenübertragung gesendet werden und vom Computer 200 angezeigt werden.

Alternativ kann das umgebende elektromagnetische Feld auch von einem Stator 114 erzeugt werden, der an einem anderen Ort der Werkzeugmaschine angebracht sein kann bzw. es kann von mehreren Statoren erzeugt werden. Insbesondere kann das Statorfeld auch so ausgebildet sein, dass es während des Bearbeitungsvorgangs der Werkzeugmaschine den Sensor abdeckt, d.h. der Stator 114 ist in der Nähe der Werkzeugspindel montiert.

In Fig. 2 ist der Aufbau des Sensors 100 schematisch dargestellt. Der Sensor 100 weist zumindest eine Messeinrichtung 103 auf. Die Messeinrichtung 103 misst eine in der Werkzeugmaschine auftretende physikalische Größe, die im Zusammenhang mit einem von der Werkzeugmaschine durchgeführten Bearbeitungsvorgang steht. Beispielsweise kann die Messeinrichtung ein Piezoelement zur Messung von Körperschall oder auch eine Anordnung von Dehnungsmessstreifen (DMS) zur Messung von Drehmomenten oder Vorschubkräften sein. Die elektrischen Signale der Messeinrichtung 103 werden zu einer Elektronik 101 geleitet, welche einen Mikroprozessor enthalten kann. In der Elektronik kann die Verstärkung der Sensorsignale durchgeführt werden. Außerdem weist der Sensor 100 eine Sende- und eine Empfangseinheit 108 auf, die der Datenübertragung an ein Überwachungssystem dient, wie oben beschrieben wurde.

Erfindungsgemäß gibt es eine erste und eine zweite Energieversorgung des Sensors 100. In der in Fig.2 dargestellten Ausführungsform des Sensors 100 umfasst die erste Energieversorgung eine Spule 105, die als Sekundärspule elektrische Energie aus dem den Sensor 100 umgebenden elektromagnetischen Feld (Statorfeld) bezieht. Die beiden Akkumulatoren 102 bilden die zweite Energieversorgung des Sensorsystems. Die Akkumulatoren 102 können nun von der ersten Energieversorgungseinheit, d. h. der Spule 105, aufgeladen werden. Alternativ können auch gewöhnliche, nicht aufladbare Batterien verwendet werden. Zum Laden von Akkumulatoren weist die Elektronik 101 zusätzlich eine Ladeelektronik (in Fig. 2 nicht separat dargestellt) für die Akkumulatoren 102 auf. Die Ladeelektronik misst den Ladungszustand der Akkumulatoren 102, beispielsweise durch eine Messung der Spannung der Akkumulatoren, und berechnet die Restladezeit der Akkumulatoren 102. Weiterhin kann die Ladeelektronik erkennen, ob sich der Sensor 100 in einem hinreichend starken Statorfeld befindet. Wenn sich die Akkumulatoren 102 nicht im Vollladezustand befinden und sich der Sensor 100 in einem Statorfeld befindet, werden die Akkumulatoren 102 geladen, bis der Vollladezustand erreicht ist. Wenn der Sensor aus dem Statorfeld entfernt wird, wird der Ladevorgang unterbrochen. Kommt der Sensor 100 danach wieder in das Statorfeld, wird der Ladevorgang fortgesetzt.

Es ist weiterhin wichtig für das Sensorsystem 10, eine Tiefentladung der Akkumulatoren 102 zu verhindern, d.h. es muss ein bestimmtes Ladungsniveau der Akkumulatoren 102 gewährleistet sein. Die Ladeelektronik 101 des Sensorsystems ist ausgebildet, um eine Tiefentladung der Akkumulatoren 102 zu verhindern. Dazu kann die Berechnung der Restladezeit der Akkumulatoren 102 dienen, indem rechtzeitig Gegenmaßnahmen ergriffen werden, wenn ein bestimmtes Ladungsniveau unterschritten wird. Dazu wird außerhalb eines Bearbeitungsvorgangs der Werkzeugmaschine und in Abwesenheit eines umgebenden Statorfelds der Energieverbrauch der Messeinrichtung 103 des Sensors 100 reduziert. Wenn beispielsweise Dehnungsmessstreifen verwendet werden, wird die Brückenspannung der Messschaltung ausgeschaltet. Zusätzlich wird die Datenübertragung periodisch mit einem ersten Zeitintervall t₁, welches vorzugsweise 200 ms beträgt, überprüft. Wenn während einer zweiten Zeitperiode t₂, die größer als die erste Zeitperiode t₁ ist, keine Datenübertragung erfolgt ist, wird der Sensor 100 ganz abgeschaltet. Wenn der Sensor 100, welcher sich in diesem völligen Ruhezustand befindet, danach wieder in ein hinreichend großes Statorfeld gelangt, schaltet sich der Sensor 100 automatisch ein. Dabei wird die Rate der Datenübertragung wieder auf 10 ms gesetzt, die Messeinrichtung 103 wird angeschaltet, beispielsweise indem die Brückenspannung für den / die Dehnungsmessstreifen wieder aktiviert wird und gegebenenfalls wird ein Eichungsvorgang durchgeführt.

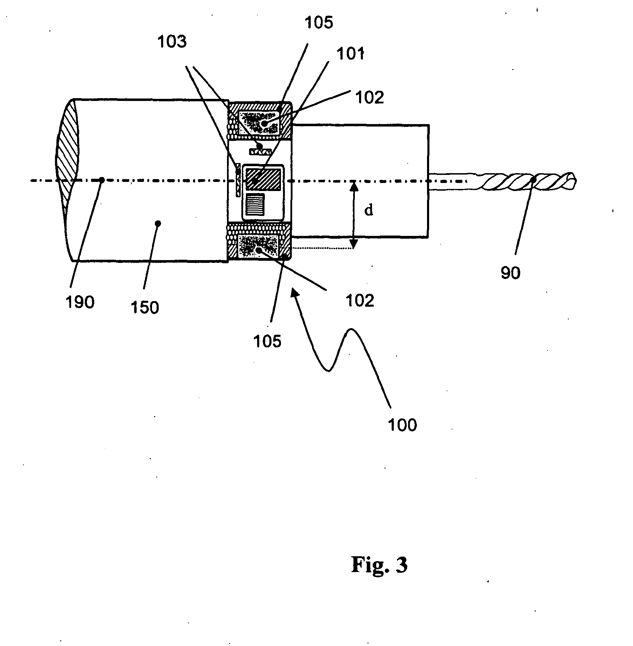

In Fig. 3 ist ein Querschnitt durch die Werkzeugspindel in einer bevorzugten Ausführungsform der Erfindung gezeigt. Man erkennt die beiden Energieversorgungssysteme der bevorzugten Ausführungsform, nämlich die Spule 105 und die Akkumulatoren 102, welche zweifach vorhandenen sind.

Die beiden Akkumulatoren 102 sind so angeordnet, dass sie einander gegenüberliegen und sich im gleichen Abstand d von der Drehachse 190 befinden. Dadurch ist gewährleistet, dass bei einer Rotation des Sensors keine Unwucht durch die Akkumulatoren erzeugt wird. Die Akkumulatoren 102 werden außerdem bevorzugt in so genannte Taschen aus weichem Verguss eingelassen, die ein leichtes nachträgliches Austauschen der Akkumulatoren 102 erlauben. Denkbar ist jedoch auch die Anordnung von ringförmigen Akkumulatoren, die sich im Wesentlichen zylinder- oder gürtelförmig um die Drehachse 190 erstrecken.

## Patentansprüche

1. Sensorsystem für eine Werkzeugmaschine mit einem Sensor (100) aufweisend:
zumindest eine Messeinrichtung (103), die eine in der Werkzeugmaschine auftretende physikalische Größe misst, die im Zusammenhang mit einem von der Werkzeugmaschine durchgeführten Bearbeitungsvorgang steht; und
eine erste Energieversorgungseinheit (105) zur Versorgung der zumindest einen Messeinrichtung (103) des Sensors (100), wobei die erste Energieversorgungseinheit (105) drahtlos elektrische Energie aus einem umgebenden elektromagnetischen Feld aufnimmt,
**dadurch gekennzeichnet, dass** das Sensorsystem für eine Werkzeugmaschine weiterhin umfasst:
eine zweite Energieversorgungseinheit zur Versorgung der zumindest einen Messeinrichtung (103) des Sensors (100), wobei die zweite Energieversorgungseinheit zumindest eine Batterie (102) umfasst; und
eine Sende- und / oder eine Empfangseinheit (108) zur Datenübertragung,
wobei das Sensorsystem so ausgebildet ist, um außerhalb eines Bearbeitungsvorgangs der Werkzeugmaschine und in Abwesenheit eines umgebenden elektromagnetischen Feldes die zumindest eine Messeinrichtung (103) des Sensorsystems abzuschalten und die Datenübertragung periodisch mit einer ersten Zeitperiode t₁ zu überprüfen.

2. Sensorsystem gemäß Anspruch 1, wobei die Batterie (102) als ein aufladbarer Akkumulator (102) ausgebildet ist und wobei die erste drahtlose Energieversorgungseinheit (105) den aufladbaren Akkumulator (102) auflädt.

3. Sensorsystem gemäß Anspruch 2, wobei das Sensorsystem ferner eine Ladeelektronik (101) aufweist, die eine Tiefentladung des Akkumulators (102) verhindert.

4. Sensorsystem gemäß Anspruch 3, wobei die Sende- und / oder die Empfangseinheit (108) zur Steuerung der Ladeelektronik (101) eingesetzt wird.

5. Sensorsystem gemäß Anspruch 1, wobei das Sensorsystem ausgebildet ist, um außerhalb eines Bearbeitungsvorgangs der Werkzeugmaschine und in Abwesenheit eines umgebenden elektromagnetischen Feldes den Sensor (100) vollständig auszuschalten, wenn während einer zweiten Zeitperiode t₂, die größer ist als die erste Zeitperiode t₁, keine Datenübertragung erfolgt.

6. Sensorsystem nach Anspruch 1 oder 5, wobei der Sensor (100) durch eine erneute Anwesenheit des umgebenden elektromagnetischen Felds aktiviert wird.

7. Sensorsystem gemäß einem der vorangegangenen Ansprüche, wobei die mindestens eine Batterie (102) des Sensors (100) bezüglich einer Drehachse (190) der Werkzeugmaschine so angeordnet ist, dass bei einer Drehung um die Drehachse (190) im Wesentlichen keine Unwucht erzeugt wird.

8. Sensorsystem nach Anspruch 7, wobei der Sensor (100) eine Mehrzahl von Batterien (102) aufweist, die im Wesentlichen den gleichen Abstand d von der Drehachse (190) der Werkzeugmaschine aufweisen.

9. Sensorsystem gemäß einem der vorangegangenen Ansprüche, ferner aufweisend eine Primärspule (114), die das umgebende elektromagnetische Feld so erzeugt, dass es ein Magazin (140) abdeckt, welches zur Aufnahme des Sensors (100) außerhalb der Bearbeitungsphase dient.

10. Sensorsystem gemäß einem der vorangegangenen Ansprüche, wobei die zumindest eine Messeinrichtung (103) und die erste (105) und die zweite Energieversorgungseinheit (102) so ausgebildet sind, dass sie sich beim Bearbeitungsvorgang zusammen mit einem sich bewegenden Bereich (80) der Werkzeugmaschine mitbewegen.

## Claims

1. Sensor system for a machine tool with a sensor (100) comprising
at least one measurement instrument (103) which measures a physical quantity occurring within the machine tool which is related to a mashining process performed by the machine tool;
a first energy supply unit (105) for supply of said at least one measurement instrument (103) of said sensor (100) wherein said first energy supply unit (105) receives electric energy from a surrounding electromagnetic field in a wireless way,
**characterized in that** said sensor system for a machine tool further comprises
a second energy supply unit for supply of said at least one measuring instrument (103) of said sensor (100), wherein said second energy supply unit comprises at least one battery (102) and
a transmitter and / or receiver unit (108) for data transmission,
wherein said sensor system is designed in such a way that in the absence of a machining process of said machine tool and when a surrounding electromagnetic field is not present, it switches off said at least one measurement instrument (103) of said sensor system and checks said data transmission periodically with a first time period t₁.

2. Sensor system according to claim 1, wherein said battery (102) is provided as a rechargeable accumulator (102) and wherein said first wireless energy supply unit (105) loads the rechargeable accumulator (102).

3. Sensor system according to claim 2, wherein the sensor system further comprises a load electronics (101) which prevents a deep discharge of said accumulator (102).

4. Sensor system according to claim 3, wherein said transmitter and / or receiver unit (108) is used for controlling said load electronics (101).

5. Sensor system according to claim 1, wherein said sensor system is designed in such a way that in the absence of a machining process of said machine tool and when a surrounding electromagnetic field is not present, it switches off said sensor (100) entirely, if no data transmission takes place during a second time period t₂ which is larger than first time period t₁.

6. Sensor system according to claim 1 or 5, wherein said sensor (100) is activated when the surrounding electromagnetic field is present anew.

7. Sensor system according to one of the preceding claims, wherein said at least one battery (102) of said sensor (100) is arranged with respect to the rotation axis (190) of said machine tool in such a way that essentially no unbalance is generated during a rotation around said rotation axis (190).

8. Sensor system according to claim 7, wherein said sensor (100) comprises a plurality of batteries (102) which have essentially the same distance d from said rotation axis (190) of said machine tool.

9. Sensor system according to one the preceding claims, further comprising a primary coil (114) which generates said surrounding electromagnetic field in such a way that it covers a magazine (140) which is employed for receiving said sensor (100) when the machining phase is interrupted.

10. Sensor system according to one of the preceding claims, wherein said at least one measurement instrument (103) and said first (105) and said second energy supply unit (102) are designed in such a way that they move together with a moving part (80) of said machine tool during the machining process.

## Revendications

1. Système de capteur pour une machine-outil munie d'un capteur (100) comprenant au moins un dispositif de mesure (103), lequel mesure une grandeur physique qui est générée dans la machine-outil et qui est en rapport avec une opération d'usinage réalisée par la machine-outil, et comprenant une première unité d'alimentation en énergie (105) pour alimenter le dispositif de mesure au nombre d'au moins un (103) du capteur (100), la première unité d'alimentation en énergie (105) prélevant, sans fil, de l'énergie électrique dans un champ électromagnétique environnant, **caractérisé en ce que** le système de capteur pour une machine-outil comprend également une seconde unité d'alimentation en énergie pour alimenter le dispositif de mesure au nombre d'au moins un (103) du capteur (100), la seconde unité d'alimentation en énergie comportant au moins une batterie (102), et comprend une unité émettrice et/ou une unité réceptrice (108) pour la transmission des données, le système de capteur étant conçu pour couper le dispositif de mesure au nombre d'au moins un (103) du système de capteur en dehors d'une opération d'usinage de la machine-outil et en l'absence de champ électromagnétique environnant et pour contrôler périodiquement la transmission de données selon une première période de temps t₁.

2. Système de capteur selon la revendication 1, la batterie (102) étant conformée en accumulateur rechargeable (102), et la première unité d'alimentation en énergie sans fil (105) chargeant l'accumulateur rechargeable (102).

3. Système de capteur selon la revendication 2, le système de capteur comportant en plus une électronique de charge (101) qui empêche une décharge profonde de l'accumulateur (102).

4. Système de capteur selon la revendication 3, l'unité émettrice et/ou l'unité réceptrice (108) étant mise en oeuvre pour commander l'électronique de charge (101).

5. Système de capteur selon la revendication 1, le système de capteur étant conformé pour couper complètement le capteur (100) en dehors d'une opération d'usinage de la machine-outil et en l'absence de champ électromagnétique environnant, si aucune transmission de données n'a lieu durant une seconde période de temps t₂ supérieure à la première période de temps t₁.

6. Système de capteur selon la revendication 1 ou 5, le capteur (100) étant activé par le retour du champ électromagnétique environnant.

7. Système de capteur selon une des revendications précédentes, la batterie au nombre d'au moins une (102) du capteur (100) étant disposée par rapport à un axe de rotation (190) de la machine-outil, de façon à n'engendrer sensiblement aucun balourd lors de sa rotation autour de l'axe de rotation (190).

8. Système de capteur selon la revendication 7, le capteur (100) comportant une pluralité de batteries (102), lesquelles présentent sensiblement la même distance d par rapport à l'axe de rotation (190) de la machine-outil.

9. Système de capteur selon une des revendications précédentes, comprenant en plus une bobine primaire (114) qui génère le champ électromagnétique environnant, de façon que celui-ci couvre un magasin (140) servant à recevoir le capteur (100) en dehors de la phase d'usinage.

10. Système de capteur selon une des revendications précédentes, le dispositif de mesure au nombre d'au moins un (103) et les première et seconde unités d'alimentation en énergie (105, respectivement 102) étant conformés de façon à se déplacer, lors de l'opération d'usinage, conjointement avec une zone en mouvement (80) de la machine-outil.
